# EUROPÄISCHE PATENTSCHRIFT

(11) **EP 4 524 450 B1**
(45) Veröffentlichungstag und Bekanntmachung des Hinweises auf die Patenterteilung: **02.12.2026**
(21) Anmeldenummer: 24192510.6
(22) Anmeldetag: 02.08.2024
(51) Int. Cl.: F16P 3/14, G01S 13/76, G01S 13/87

(54) **SICHERHEITSSYSTEM**
SECURITY SYSTEM
SYSTÈME DE SÉCURITÉ

(30) Priorität: 30.08.2023 DE 102023123379
(43) Veröffentlichungstag der Anmeldung: 19.03.2025
(73) Patentinhaber: SICK AG, 79183 Waldkirch (DE)
(72) Erfinder: Kammer, Dr. Hans-Jürgen, 79183 Waldkirch (DE); Hagel, Andreas, 79183 Waldkirch (DE)

(56) Entgegenhaltungen:
- DE-A1- 102021 120 130
- DE-A1- 102021 120 131

## Beschreibung

Die vorliegende Erfindung betrifft ein Sicherheitssystem zur Lokalisierung von mindestens einem ortsveränderlichen mobilen Objekt gemäß dem Oberbegriff von Anspruch 1.

Im Bereich der industriellen Sicherheitstechnik werden Fahrzeuge zum Personenschutz mit Sicherheitssensoren ausgestattet.

Autonome Fahrzeuge werden im industriellen Umfeld von Lidar-Sicherheitsscannern und in einem zweiten Bereich mit einem Funksicherheitssystem abgesichert.

Gemäß der DE 10 2019 128 782 A1 wird ein Schutzfeld deaktiviert, wenn ein Sicherheitspunkt oder ein Sicherheitsort erkannt wird.

Die DE 10 2015 220 495 A1 offenbart eine Anpassung eines Schutzfeldes eines Laserscanners bei einer Durchfahrt eines Durchgangs.

Die DE 10 2021 120 131 A1 offenbart ein Sicherheitssystem zur Lokalisierung von mindestens einem ortsveränderlichen Objekt, mit mindestens einer Steuer- und Auswerteeinheit, mit mindestens einem Funkortungssystem, mit mindestens einem ortsauflösenden Sensor zur Detektion eines Objektes in einem Erfassungsbereich des ortsauflösenden Sensors, wobei das Funkortungssystem mindestens drei angeordnete Funkstationen aufweist, wobei an dem Objekt mindestens ein Funktransponder angeordnet ist, wobei mittels dem Funkortungssystem Positionsdaten des Funktransponders und damit Positionsdaten des Objekts ermittelbar sind, wobei die Positionsdaten von der Funkstation des Funkortungssystems an die Steuer- und Auswerteeinheit übermittelbar sind, wobei die Steuer- und Auswerteeinheit ausgebildet ist, die Positionsdaten des Funktransponders zyklisch zu erfassen, und mittels des ortsauflösenden Sensors Informationen zu dem Objekt im Erfassungsbereich ermittelbar sind, wobei die Informationen zu dem Objekt im Erfassungsbereich von dem ortsauflösenden Sensor an die Steuer- und Auswerteeinheit übermittelbar sind, wobei die Steuer- und Auswerteeinheit ausgebildet ist, die Positionsdaten des Funkortungssystems und die Informationen des ortsauflösenden Sensors auszuwerten, wobei zwischen den Funkstationen und den Funktranspondern eine bidirektionale Funkkommunikation vorgesehen ist, wobei die Funktransponder jeweils sichere Signalausgänge aufweisen, und die Funktransponder jeweils sichere Signaleingänge aufweisen.

Die DE 10 2021 120 130 A1 offenbart ein Sicherheitssystem und Verfahren mit einem Sicherheitssystem zur Lokalisierung einer Person und/oder eines Objektes, mit einer Steuer- und Auswerteeinheit, mit mindestens einem Funkortungssystem zur Positionsbestimmung der Person und/oder des Objektes, mit mindestens einem ortsauflösenden Sensor zur Anwesenheitsbestimmung der Person und/oder des Objektes in einem Schutzfeld des ortsauflösenden Sensors, wobei das Funkortungssystem angeordnete Funkstationen aufweist, wobei an der Person und/oder dem Objekt mindestens ein Funktransponder angeordnet wird, wobei mittels dem Funkortungssystem Positionsdaten der Person und/oder des Objektes ermittelt werden, wobei die Positionsdaten von den Funkstationen des Funkortungssystems an die Steuer- und Auswerteeinheit übermittelt werden, und mittels dem ortsauflösenden Sensor Statusinformationen zum Schutzfeld ermittelt werden, wobei die Statusinformationen zum Schutzfeld von dem ortsauflösenden Sensor an die Steuer- und Auswerteeinheit übermittelt werden, wobei die Positionsdaten des Funkortungssystems und die Statusinformationen des ortsauflösenden Sensors ausgewertet werden und wenn eine Person und/oder ein Objekt von dem Funkortungssystem ermittelt wird der ortsauflösenden Sensor in einen uneingeschränkten Betrieb mit nicht reduziertem Detektionsvermögen zu versetzt wird, und wenn keine Person und/oder kein Objekt von dem Funkortungssystem ermittelt wird der ortsauflösenden Sensor in einen eingeschränkten Betrieb mit reduziertem Detektionsvermögen zu versetzt wird.

Eine Aufgabe der Erfindung besteht darin, ein verbessertes Sicherheitssystem bereitzustellen, wobei ein Funktransponder aktiviert werden soll, sobald dieser verfügbar ist und diesen in das Sicherheitssystem eingebunden werden soll.

Die Aufgabe wird gemäß Anspruch 1 gelöst.

Bei dem mobilen Objekt kann es sich um ein Fahrzeug handeln. Bei dem Fahrzeug kann es sich beispielsweise um ein führerloses Fahrzeug, fahrerloses Fahrzeug bzw. autonomes Fahrzeug, um ein autonom geführtes Fahrzeug (Autonomous Guided Vehicles, AGV), um einen automatisch mobilen Roboter (Automated Mobile Robots, AMR) oder um einen industriemobilen Roboter (Industrial Mobile Robots, IMR) handeln. Das Fahrzeug weist somit einen Antrieb auf und kann in verschiedenen Richtungen bewegt werden.

Die Sicherheitssteuerung kann auch synonym als Sicherheits-Steuer- und Auswerteeinheit bezeichnet werden. Die Sicherheitssteuerung ist ausgebildet, Signaleingänge der Sicherheitssteuerung auszuwerten und Signalausgänge der Sicherheitssteuerung anzusteuern. Bei der Sicherheitssteuerung handelt es sich beispielsweise um eine sichere speicherprogrammierbare Steuerung (Abkürzung: SSPS).

Der Funktransponder verfügt über sichere primäre Signalausgänge, insbesondere einen sicherheitsgerichteten Ausgang zur Signalisierung des Zustandes der primären Sicherheitsfunktion. Der primäre Signalausgang wird beispielsweise durch Halbleiterschaltausgänge z.B. ein Output Safety Switching Device (OSSD) gebildet.

Der Funktransponder verfügt des Weiteren über mindestens einen sekundären Signalausgang, insbesondere über einen sekundären sicherheitsgerichteten Ausgang, der z.B. zweikanalig oder einkanalig mit periodischem Test ausgeführt sein kann. Beispielsweise mit einer Querschlusserkennung, je nach geforderten Sicherheitsanforderungen.

Der sekundäre Signalausgang bzw. der sekundäre sicherheitsgerichtete Signalausgang signalisiert der Sicherheitssteuerung, ob die primären Signalausgänge des Funktransponders den Zustand der Sicherheitssteuerung steuern sollen, oder ob z.B. ein Sicherheitssensor den Zustand der Sicherheitssteuerung steuern soll und über die Sicherheitsfunktion bestimmen soll.

Der Funktransponder gibt über den primären Signalausgang bzw. sicheren primären Signalausgang bzw. über die sichere bidirektionale Schnittstelle, bzw. eine Sicherheitsschnittstelle ein sicheres Ausgangssignal an die Sicherheitssteuerung aus, und damit insbesondere an das mobile Objekt. Beispielsweise wird das mobile Objekt daraufhin abgebremst, verlangsamt oder gar gestoppt.

Über die sicheren primären Signalausgänge bzw. die sichere bidirektionale Schnittstelle erfolgt eine Ausgabe sicherheitsrelevanter Signale an die Sicherheitssteuerung und damit an das mobile Objekt.

Insbesondere der Funktransponder mit dem sicheren primären Signalausgang erlaubt die direkte Einwirkung auf das mobile Objekt.

Die Erfindung löst das Problem, beim Übergang in eine Umgebung mit Funkortung sicher zwischen dem Funktransponder und ggf. Sicherheitssensoren umzuschalten, mit geringem Integrationsaufwand.

Wenn der Funktransponder im Funknetz registriert ist und seine Sicherheitsfunktion ausführen kann, dann soll z.B. ein High-Pegel am sicheren sekundären Signalausgang ausgegeben werden.

Wenn keine Funkverbindung besteht und die primäre Sicherheitsfunktion des Funktransponders nicht ausgeführt werden kann, dann soll z.B. ein Low-Pegel am sicheren sekundären Signalausgang ausgegeben werden.

Die verwendeten Pegel sind beispielhaft und können auch umgekehrt verwendet werden. Prinzipiell könnte damit auch ein High-Pegel ausgegeben werden, wenn keine Funkverbindung besteht und der sichere primäre Signalausgang bzw. der primäre Sicherheitsausgang im sicheren Zustand verbleibt.

Der Funktransponder kann auch mit einer sicheren bidirektionalen Schnittstelle bzw. einem bidirektionalen Sicherheitsbus realisiert werden. Die beschriebenen primären und sekundären Sicherheitssignale sind dann entsprechend in den sicheren Daten enthalten.

Die sichere bidirektionale Schnittstelle ist elektronisch mit der Sicherheitssteuerung verbunden, wobei über die sichere bidirektionale Schnittstelle jeweils sichere primäre Ausgangssignale übertragen werden, und über die sichere bidirektionale Schnittstelle jeweils mindestens sichere sekundäre Ausgangsignale übertragen werden.

Die Anmeldung des Funktransponders erfolgt beispielsweise mit automatischer Registrierung. Der Funktransponder sucht dabei permanent nach dem Funknetz und führt die Anmeldung im Sicherheitssystem selbständig durch.

Ein zeitlicher Ablauf erfolgt beispielsweise wie folgt:
Zu einem ersten Zeitpunkt tritt der Funktransponder in eine Funkzone ein und wird vom Sicherheitssystem registriert. Eine Lokalisierungsfunktion bzw. eine Sicherheitsfunktion wird von der Steuer- und Auswerteeinheit gestartet.

Zu einem zweiten Zeitpunkt meldet der sichere sekundäre Signalausgang des Funktransponders der Sicherheitssteuerung, dass der Funktransponder bereit ist, die Sicherheitsfunktion zu übernehmen. Sichere Signalausgänge von einem anderen Sicherheitssensor sind dabei noch in einem sicheren Zustand, so dass kein gefahrbringender Zustand von der Sicherheitssteuerung zugelassen werden kann.

Zu einem dritten Zeitpunkt sind die sichere primären Signalausgänge des Funktransponders aktiv und werden von der Sicherheitssteuerung ausgewertet. Die sicheren Signalausgänge von einem anderen Sicherheitssensor können und werden von der Sicherheitssteuerung ignoriert.

Zu einem vierten Zeitpunkt reißt die Funkverbindung zum Funktransponder beispielsweise ab.

Zu einem fünften Zeitpunkt wechselt der sichere primäre Signalausgang des Funktransponders in einen sicheren Zustand.

Zu einem sechsten Zeitpunkt signalisiert der sichere sekundäre Signalausgang, dass der Funktransponder nicht mehr seine Sicherheitsfunktion ausführt und im sicheren Zustand verbleibt. Das bedeutet, dass die sicheren primären Signalausgänge in einem sicheren Zustand bleiben. Die Sicherheitssteuerung wechselt zur Auswertung der Sicherheitsausgänge von angeschlossenen Sicherheitssensoren und ignoriert die sicheren primären Signalausgänge des Funktransponders.

Hierdurch wird ein einfaches Sicherheitssystem zum Wechsel der aktiven Sicherheitsquellen bereitgestellt. Es handelt sich dabei um eine einfache Logik mit wenig Verdrahtungsaufwand. Eine Sicherheit ist durch eine Mehrkanaligkeit bzw. Testung gewährleistet. D. h. es werden bewährte Sicherheitsprinzipien verwendet.

Der Einsatzbereich von mobilen Objekten bzw. fahrerloser Transportsysteme wie autonome mobile Objekte kann erweitert werden auf Aufenthaltsbereiche des mobilen Objektes, die mit einem konventionellen Sicherheitsscanner nicht abgesichert werden können.

Die Steuer- und Auswerteeinheit bzw. ein zentraler RTLS-Server empfängt die gemessenen Signallaufzeiten und ermittelt daraus Positionswerte der vorhandenen Funktransponder.

Die Ortung der Funktransponder erfolgt durch Laufzeitmessungen von Funksignalen, die zyklisch zwischen den Funktranspondern und beispielsweise mehreren festen Funkstationen ausgetauscht werden. Diese Auswertung funktioniert sehr gut, wenn die Signale mit ausreichender Signalstärke und auf geradem bzw. direkten Ausbreitungswegen übermittelt werden.

Es werden die Signale eines Funktransponders von beispielsweise mehreren ortsfesten Funkstationen bzw. Ankerstationen empfangen und über eine Laufzeitvermessung z.B. 'Time of arrival' (TOA) oder z.B. 'Time Difference of Arrival' (TDOA) die Grundlage für die Ortung geschaffen. Die Berechnung bzw. Schätzung der Position eines Funktransponders geschieht dann auf der Steuer- und Auswerteeinheit beispielsweise einem zentralen RTLS-Server (Real-Time-Location-System-Server), der über eine drahtlose oder drahtgebundene Datenverbindung an alle Funkstationen bzw. Ankerstationen angeschlossen ist. Diesen Modus der Ortung nennt man RTLS-Modus (Real-Time-Location-System-Modus).

Insbesondere weist das Funkortungssystem mindestens drei angeordnete Funkstationen auf, wobei die Positionsdaten von der Funkstation des Funkortungssystems an die Steuer- und Auswerteeinheit übermittelbar sind.

Der Funktransponder weist beispielsweise eine Rechnereinheit auf. Beispielsweise ist die Rechnereinheit durch einen Mikrocontroller gebildet.

Der sichere primäre Signalausgang, insbesondere der sicherheitsgerichtete Ausgang zur Signalisierung des Zustandes der primären Sicherheitsfunktion kann auf folgende Weise, insbesondere durch die Rechnereinheit geprüft werden: Beispielsweise mit einer Querschlusserkennung, je nach geforderten Sicherheitsanforderungen. Beispielsweise ist eine Checksumme oder eine Prüfsumme vorgesehen. Weiter können alternierende Signale vorgesehen sein. Beispielsweise muss eine vorgesehene Modulations-Frequenz einer vorgegebenen Erwartungshaltung entsprechen. Beispielsweise ist ein zeitlich variierendes Signal vorgesehen. Beispielsweise ist ein fortlaufend veränderliches Signal vorgesehen. Beispielsweise ist ein Zeitstempel vorgesehen.

Der sichere sekundäre Signalausgang, insbesondere der sekundäre sicherheitsgerichtete Ausgang, der z.B. zweikanalig oder einkanalig mit periodischem Test ausgeführt sein kann, wird beispielsweise auf folgende Weise, insbesondere durch die Rechnereinheit geprüft: Beispielsweise mit einer Querschlusserkennung, je nach geforderten Sicherheitsanforderungen. Beispielsweise ist eine Checksumme oder eine Prüfsumme vorgesehen. Weiter können alternierende Signale vorgesehen sein. Beispielsweise muss eine vorgesehene Modulations-Frequenz einer vorgegebenen Erwartungshaltung entsprechen. Beispielsweise ist ein zeitlich variierendes Signal vorgesehen. Beispielsweise ist ein fortlaufend veränderliches Signal vorgesehen. Beispielsweise ist ein Zeitstempel vorgesehen.

In Weiterbildung der Erfindung weist der Funktransponder mindestens einen sicheren Signaleingang auf, wobei der sichere Signaleingang mit der Sicherheitssteuerung verbunden ist. Mittels des sichereren Signaleingangs kann der Funktransponder von der Sicherheitssteuerung getestet werden. Beispielsweise wird zyklisch ein Signal von der Sicherheitssteuerung an den Funktransponder gesendet, um den Funktransponder zu testen. Der Funktransponder kann beispielsweise über den sekundären Signalausgang als Rückmeldung antworten.

Der sichere Signaleingang wird beispielsweise auf folgende Weise, insbesondere durch die Rechnereinheit geprüft: Beispielsweise mit einer Querschlusserkennung, je nach geforderten Sicherheitsanforderungen. Beispielsweise ist eine Checksumme oder eine Prüfsumme vorgesehen. Weiter können alternierende Signale vorgesehen sein. Beispielsweise muss eine vorgesehene Modulations-Frequenz einer vorgegebenen Erwartungshaltung entsprechen. Beispielsweise ist ein zeitlich variierendes Signal vorgesehen. Beispielsweise ist ein fortlaufend veränderliches Signal vorgesehen. Beispielsweise ist ein Zeitstempel vorgesehen.

In Weiterbildung der Erfindung weist der Funktransponder mindestens einen Triggersignaleingang auf, wobei der Triggersignaleingang mit der Sicherheitssteuerung verbunden ist.

Mittels des Triggersignaleingangs des Funktransponders kann die Sicherheitssteuerung die Registrierung des Funktransponders im Sicherheitssystem starten bzw. initiieren.

In Weiterbildung der Erfindung ist mindestens ein ortsauflösender Sensor zur Detektion mindestens eines Objektes in einem Erfassungsbereich des ortsauflösenden Sensors vorgesehen.

Bei dem ortsauflösenden Sensor handelt es sich beispielsweise um einen optoelektronischen Sensor. Bei beispielsweise einem Lichtlaufzeitsensor als optoelektronischer Sensor wird das von einem Lichtsender ausgesendete Licht, welches von der Person oder dem Objekt remittiert wird, von einem Lichtempfänger empfangen und die Lichtlaufzeit vom Aussenden bis zum Empfangen von der Person oder dem Objekt wird ausgewertet, wodurch die Entfernung zu der Person oder dem Objekt bestimmt werden kann. Dabei handelt es sich um eine Ortung, nämlich beispielsweise der Bestimmung von Entfernung und Winkel.

Beispielsweise ist der ortsauflösende Sensor ein Ultraschallsensor oder ein Radarsensor.

Ein Ultraschallsensor sendet Ultraschall aus und wertet die reflektierten Schallwellen, also die Echosignale aus. Dabei werden Frequenzen ab 16 kHz verwendet. Dabei können Detektionsreichweiten von wenigen Zentimetern bis vielen Metern realisiert werden.

Ein Radarsensor ist ein Sensor, der ein sogenanntes Primärsignal als gebündelte elektromagnetische Welle aussendet, die von Personen oder Objekten reflektierten Echos als Sekundärsignal empfängt und nach verschiedenen Kriterien auswertet. Dabei handelt es sich um eine Ortung, nämlich beispielsweise der Bestimmung von Entfernung und Winkel.

Aus den empfangenen, von der Person oder dem Objekt reflektierten Wellen können Positionsinformationen bzw. die Position gewonnen werden. Wie bereits erwähnt, kann der Winkel bzw. die Richtung zum Objekt und die Entfernung zur Person oder dem Objekt aus der Zeitverschiebung zwischen Senden und Empfangen des Signals ermittelt werden. Weiter kann auch die Relativbewegung zwischen Sender und Person bzw. Objekt festgestellt werden, beispielsweise durch eine einfache Mehrfachmessung in zeitlichen Abständen. Das Aneinanderreihen einzelner Messungen liefert die Wegstrecke und die Absolutgeschwindigkeit des Objektes. Bei entsprechender Auflösung des Radarsensors können Konturen der Person bzw. des Objektes erkannt werden.

Eine Abstrahlung von dem Radarsensor erfolgt beispielsweise aufgrund des Antennenentwurfs weitgehend gebündelt in eine Richtung. Die Strahlungscharakteristik der Antenne hat dann eine sogenannte Keulenform.

Die Wellenlänge des Radars liegt im Bereich der Funkwellen im Kurz- bis Mikrowellenbereich. Ein Pulsradarsensor sendet Impulse mit einer typischen Dauer im unteren Mikrosekundenbereich und wartet dann auf Echos. Die Laufzeit des Impulses ist die Zeit zwischen dem Senden und dem Empfang des Echos. Sie wird zur Entfernungsbestimmung genutzt.

Eine Richtung des Abtaststrahles eines Impulsradarsensors kann statt durch die Ausrichtung der Antenne bzw. der Antennen auch elektronisch durch phasengesteuerte Antennenarrays bewirkt werden. Damit können in schnellem Wechsel mehrere Objekte angepeilt und quasi simultan verfolgt werden.

Der Radarsensor arbeitet mit einer Leistung von beispielsweise ca. 10 mW. Diese Leistung ist so gering, dass keine gesundheitlichen Auswirkungen bestehen. Die für diese Anwendung zugelassene Radarfrequenz liegt beispielsweise im Bereich von 76-77 GHz, entsprechend einer Wellenlänge von etwa 4 mm.

Beispielsweise ist der ortsauflösende Sensor zur mindestens flächigen Überwachung eines Überwachungsbereiches ausgebildet.

Der ortsauflösende Sensor zur mindestens flächigen Überwachung eines Überwachungsbereiches ist ein Sensor zur Entfernungsmessung. Der Entfernungssensor liefert Entfernungswerte im mindestens zweidimensionalen Raum. Dabei gibt der Sensor Messwerte mit Distanzangaben und Winkelangaben aus. Beispielsweise wird die Entfernung mittels Lichtlaufzeitverfahren oder Triangulationsverfahren ermittelt.

Beispielsweise ist der ortsauflösende Sensor zur mindestens räumlichen Überwachung eines Überwachungsbereiches ausgebildet.

Beispielsweise ist der optoelektronische Sensor ein Laserscanner, ein Sicherheitslaserscanner, eine 3D-Kamera, eine Stereokamera oder eine Lichtlaufzeitkamera.

Zur Positionserfassung überwacht der ortsauflösende Sensor, der Laserscanner, der Sicherheitslaserscanner, die 3D-Kamera, die Stereokamera oder die Lichtlaufzeitkamera einen zweidimensionalen oder dreidimensionalen Überwachungsbereich bzw. eine Messdatenkontur. Dabei kann es sich auch synonym um ein Überwachungsfeld handeln.

In der Sicherheitstechnik eingesetzte Sicherheitssysteme müssen besonders zuverlässig und eigensicher arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS).

Zur Erfüllung dieser Sicherheitsnormen sind eine Reihe von Maßnahmen zu treffen, wie beispielsweise sichere elektronische Auswertung durch redundante und/oder diversitäre Elektronik oder verschiedene Funktionsüberwachungen, speziell die Überwachung der Verschmutzung optischer Bauteile einschließlich einer Frontscheibe. Ein Sicherheitslaserscanner entsprechend derartigen Normen ist beispielsweise aus der DE 43 40 756 A1 bekannt.

Der Begriff 'funktional sicher' ist im Sinne der genannten oder vergleichbaren Normen zu verstehen, es sind also Maßnahmen ergriffen, um Fehler bis zu einem spezifizierten Sicherheitsniveau zu beherrschen. Das Sicherheitssystem kann daher eigensicher ausgebildet sein. Das Sicherheitssystem und/oder mindestens ein sicherer Sensor erzeugen zudem nicht sichere Daten, wie Rohdaten, Punktwolken oder dergleichen. Nicht sicher ist der Gegenbegriff zu sicher, für nicht sichere Geräte, Übertragungswege, Auswertungen und dergleichen und dabei sind demnach die genannten Anforderungen an eine Fehlersicherheit nicht erfüllt.

Eine 3D-Kamera überwacht beispielsweise ebenfalls einen Überwachungsbereich mittels einer Vielzahl von erfassten Distanzwerten. Eine 3D-Kamera hat den Vorteil, dass ein volumenartiger Schutzbereich überwacht werden kann.

Eine Stereokamera überwacht beispielsweise ebenfalls einen Überwachungsbereich mittels einer Vielzahl von erfassten Distanzwerten. Die Distanzwerte werden auf Basis der zwei Kameras der Stereokamera ermittelt, die in einem Basisabstand zueinander montiert sind. Eine Stereokamera hat ebenso den Vorteil, dass ein volumenartiger Schutzbereich überwacht werden kann.

Mittels einer Lichtlaufzeitkamera werden Distanzwerte aufgrund der gemessenen Lichtlaufzeit ermittelt, welche von einem Bildsensor ermittelt werden. Eine Lichtlaufzeitkamera hat ebenso den Vorteil, dass ein volumenartiger bzw. räumlicher Schutzbereich überwacht werden kann.

Eine nicht beanspruchte Weiterbildung der Erfindung besteht darin, ein Sicherheitssystem mit einem Funktransponder zu implementieren, wobei der sichere sekundäre Signalausgang des Funktransponders beispielsweise zur Steuerung von Schutzfeldern des ortsauflösenden Sensors, insbesondere eines Laserscanners verwendet werden kann. Wenn die Sicherheitsfunktion des Funktransponders aktiv ist, dann können die Schutzfelder des Laserscanners z.B. verkleinert werden.

Es kann beispielsweise entweder ein Low-Pegel am sicheren Ausgang eines Sicherheitssensors (z.B. eines Laserscanners) oder eine fallende Flanke (oder ein anderes definiertes Ereignis) einen Registrierversuch bei der Sicherheitssteuerung auslösen. Dieser wird beispielsweise dadurch erzeugt, dass ein Objekt, welches an einer definierten Übergangsstelle steht, das Schutzfeld des Sicherheitssensors verletzt.

Wichtig ist, dass wenn der sichere sekundäre Signalausgang des Funktransponders anzeigt, dass die Sicherheitsfunktion des Funktransponders nicht aktiv ist, dann muss die Sicherheitssteuerung entweder die sicheren primären Signalausgänge des Funktransponders auswerten, welche sich im sicheren Zustand befinden, oder die sicheren Ausgänge eines Sicherheitssensors, beispielsweise eines Laserscanner auswerten.

Die Vorteile sind eine Energieeinsparung und/oder potentiell weniger Funkinterferenzen.

Des Weiteren kann der Funktransponder über eine Funktion verfügen, die bei Ausstattung mit einem Sicherheitssensor beispielsweise einem Scanner einen Parallelbetrieb vereinfacht.

Eine Funktion ist beispielsweise eine, welche die sicheren primären Signalausgänge des Funktransponders permanent auf dem Pegel HIGH hält, wenn eine entsprechende sicherheitsgerichte Anweisung über einen Funkkanal des Funktransponders erhalten wird. Im Fehlerfall oder bei Power-down des Funktransponders schalten die sicheren primären Signalausgänge unabhängig von dieser Funktion in den Pegel LOW, also in den sicheren Zustand.

Wenn die übergeordnete Sicherheitssteuerung also z.B. einen Lidar-Laserscanner aktiv nutzt bzw. weiß, dass dieses Sicherheitssystem aktiv ist, dann wird der sichere Funktransponder überbrückt, sodass die lokale Sicherheitssteuerung dadurch nicht in den sicheren Zustand wechseln kann. Die Sicherheit wird dann beispielsweise durch den Laserscanner gewährleistet.

In Weiterbildung der Erfindung ist das Funkortungssystem ein Ultrabreitband-Funkortungssystem, wobei die verwendete Frequenz im Bereich von 3,1 GHz bis 10,6 GHz ist. Beispielsweise beträgt die Sendeenergie pro Funkstation maximal 0,5 mW. Beispielsweise kann die Sendeenergie pro Funkstation auch maximal 1 mW betragen.

Eine absolute Bandbreite beträgt bei einem Ultrabreitband-Funkortungssystem beispielsweise wenigstens 500 MHz oder eine relative Bandbreite beträgt beispielsweise mindestens 20 % der zentralen Frequenz.

Die Reichweite eines derartigen Funkortungssystems beträgt beispielsweise 0 bis 50 m. Dabei wird die kurze zeitliche Dauer der Funkpulse für die Ortung benutzt. Das Funkortungssystem sendet damit nur Funkwellen mit einer niedrigen Energie aus.

In Weiterbildung der Erfindung werden über die sichere bidirektionale Schnittstelle mindestens sichere Eingangssignale übertragen.

In Weiterbildung der Erfindung werden über die sichere bidirektionale Schnittstelle mindestens Triggereingangssignale übertragen.

Die Erfindung kann auch auf andere Funktechnologien wie WLAN, Bluetooth oder 5G angewandt werden.

In Weiterbildung der Erfindung ist eine erste Überprüfungseinheit vorgesehen ist, wobei die erste Überprüfungseinheit mit der Steuer- und Auswerteeinheit verbunden ist, wobei die Überprüfungseinheit ausgebildet ist, die Steuer- und Auswerteeinheit zu überprüfen.

Die erste Überprüfungseinheit bzw. ein sicherer RTLS Watchdog Controller, überwacht die Steuer- und Auswerteeinheit, wobei die erste Überprüfungseinheit beispielsweise die bestimmten Positionsdaten plausibilisiert, Umschaltsignale für einen Sicherheitsstatus der einzelnen Funktransponder sendet oder beispielsweise abhängig von der Situation Überprüfungseinheit-Rücksetzsignale an die Funktransponder initiiert.

Die erste Überprüfungseinheit und die Steuer- und Auswerteeinheit bilden damit mindestens ein einkanaliges System mit Testung gemäß ISO 13849 oder optional ein zweikanaliges System. Die erste Überprüfungseinheit stellt die notwendigen Diagnosemechanismen, wie sie beispielsweise von den einschlägigen Sicherheitsnormen gefordert werden, bereit.

Die erste Überprüfungseinheit bzw. ein RTLS-Watchdog Controller dient der Überwachung und Diagnose des Sicherheitssystems und der Steuer- und Auswerteeinheit und führt Sicherheitsfunktionen des Sicherheitssystems aus. Die erste Überprüfungseinheit verwendet die Steuer- und Auswerteeinheit beispielsweise als Kommunikations-Relais. Konkret überwacht die erste Überprüfungseinheit beispielsweise die korrekte Kommunikation zwischen den Funktranspondern, den Funkstationen und der Steuer- und Auswerteeinheit, überprüft das Zeitverhalten aller Komponenten und führt auf den ermittelten Daten Konsistenzprüfungen aus. Gegebenenfalls nutzt die erste Überprüfungseinheit hierzu auch einen Funktionsblock, der in der Steuer- und Auswerteeinheit bzw. dem RTLS-Server ausgeführt wird.

Die erste Überprüfungseinheit bzw. der RTLS-Watchdog Controller verwendet die geprüften Positionsdaten des RTLS-Systems und beispielsweise vorab per Konfiguration bereitgestellte Informationen über Gefahrenstellen, Details des Betriebsumfeldes usw., um eine Bewertung der lokalen Gefährdungen vorzunehmen. Im einfachsten Fall geschieht das, indem die Abstände zwischen Personen und Gefahrenstellen ermittelt werden und bei Unterschreitung einer Sicherheitsgrenze risikomindernde Maßnahmen eingeleitet werden. Eine Risikominderung basiert beispielsweise darin, dass die Überprüfungseinheit den Funktranspondern ein sicheres Abschalt- oder Umschaltsignal sendet, das diese beispielsweise an eine angeschlossene Maschine weitergeben oder, im Falle eines Funktransponders an einer Person, ein Warnsignal oder Handlungsinstruktionen an die Person weitergeben.

Die Erfindung wird nachstehend auch hinsichtlich weiterer Vorteile und Merkmale unter Bezugnahme auf die beigefügte Zeichnung anhand von Ausführungsbeispielen erläutert.

Die Figuren der Zeichnung zeigen in:
- Figur 1 bis Figur 3: jeweils ein Sicherheitssystem;
- Figur 4: ein Signaldiagramm zur zeitlichen Signalabfolge;
- Figur 5: ein Sicherheitssystem;
- Figur 6: eine Logikschaltung.

In den nachfolgenden Figuren sind identische Teile mit identischen Bezugszeichen versehen.

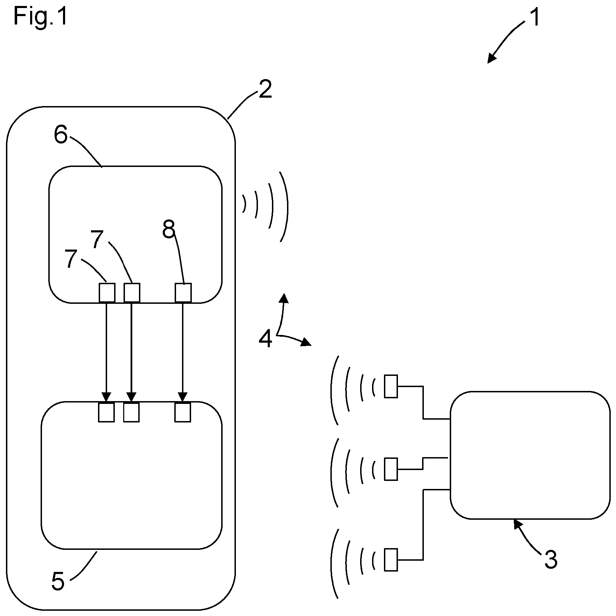

Figur 1 zeigt ein Sicherheitssystem 1 zur Lokalisierung von mindestens einem ortsveränderlichen mobilen Objekt 2, mit mindestens einer Steuer- und Auswerteeinheit 3, mit mindestens einem Funkortungssystem 4, und mit mindestens einer Sicherheitssteuerung 5, wobei an dem mobilen Objekt 2 mindestens ein Funktransponder 6 angeordnet ist, wobei mittels dem Funkortungssystem 4 Positionsdaten des Funktransponders 6 und damit Positionsdaten des mobilen Objekts 2 ermittelbar sind, wobei die Positionsdaten von dem Funkortungssystems 4 an die Steuer- und Auswerteeinheit 3 übermittelbar sind, wobei die Steuer- und Auswerteeinheit 3 ausgebildet ist, die Positionsdaten des Funktransponders 6 zyklisch zu erfassen, wobei die Steuer- und Auswerteeinheit 3 ausgebildet ist, die Positionsdaten des Funkortungssystems 4 auszuwerten, wobei der Funktransponder 6 jeweils sichere primäre Signalausgänge 7 aufweist und der Funktransponder 6 jeweils mindestens einen sicheren sekundären Signalausgang 8 aufweist, wobei die sicheren primären Signalausgänge 7 elektronisch mit der Sicherheitssteuerung 5 verbunden sind und der sichere sekundäre Signalausgang 8 mit der Sicherheitssteuerung 5 verbunden ist.

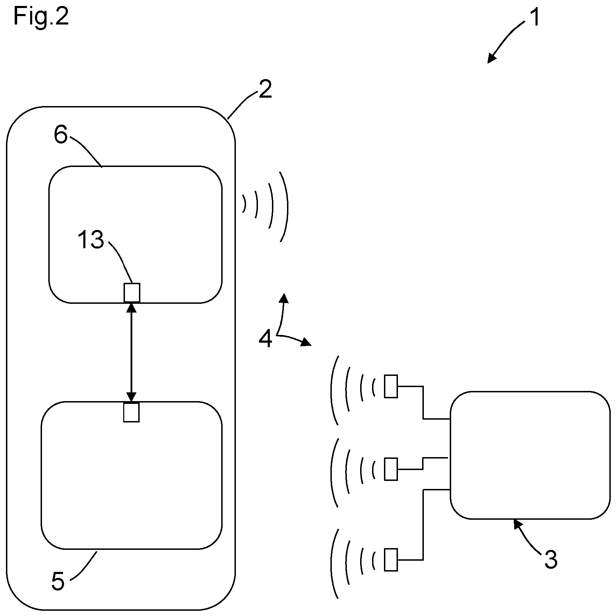

Figur 2 zeigt ein Sicherheitssystem 1 zur Lokalisierung von mindestens einem ortsveränderlichen mobilen Objekt 2, mit mindestens einer Steuer- und Auswerteeinheit 3, mit mindestens einem Funkortungssystem 4, und mit mindestens einer Sicherheitssteuerung 5, wobei an dem mobilen Objekt 2 mindestens ein Funktransponder 6 angeordnet ist, wobei mittels dem Funkortungssystem 4 Positionsdaten des Funktransponders 6 und damit Positionsdaten des mobilen Objekts 2 ermittelbar sind, wobei die Positionsdaten von dem Funkortungssystems 4 an die Steuer- und Auswerteeinheit 3 übermittelbar sind, wobei die Steuer- und Auswerteeinheit 3 ausgebildet ist, die Positionsdaten des Funktransponders 6 zyklisch zu erfassen, wobei die Steuer- und Auswerteeinheit 3 ausgebildet ist, die Positionsdaten des Funkortungssystems 4 auszuwerten, wobei der Funktransponder 6 jeweils mindestens eine sichere bidirektionale Schnittstelle 13 aufweist, wobei die sichere bidirektionale Schnittstelle 13 elektronisch mit der Sicherheitssteuerung 5 verbunden ist, wobei über die sichere bidirektionale Schnittstelle 13 jeweils sichere primäre Ausgangssignale übertragen werden, und über die sichere bidirektionale Schnittstelle 13 jeweils mindestens sichere sekundäre Ausgangsignale übertragen werden.

Bei dem mobilen Objekt 2 kann es sich beispielsweise um ein Fahrzeug handeln.

Beispielsweise werden über die sichere bidirektionale Schnittstelle 13 gemäß Figur 2 mindestens sichere Eingangssignale übertragen. Beispielsweise werden über die sichere bidirektionale Schnittstelle 13 mindestens Triggersignaleingangssignale übertragen.

Die Sicherheitssteuerung 5 ist ausgebildet, Signaleingänge der Sicherheitssteuerung 5 auszuwerten und Signalausgänge der Sicherheitssteuerung 5 anzusteuern.

Der Funktransponder 6 gemäß Figur 1 verfügt über sichere primäre Signalausgänge 7, insbesondere einen sicherheitsgerichteten Ausgang zur Signalisierung des Zustandes der primären Sicherheitsfunktion. Der sichere primäre Signalausgang 7 wird beispielsweise durch Halbleiterschaltausgänge z.B. ein Output Safety Switching Device (OSSD) gebildet.

Der Funktransponder 6 verfügt des Weiteren über einen sicheren sekundären Signalausgang 8, insbesondere über einen sekundären sicherheitsgerichteten Ausgang, der z.B. zweikanalig oder einkanalig mit periodischem Test ausgeführt sein kann. Beispielsweise mit einer Querschlusserkennung, je nach geforderten Sicherheitsanforderungen.

Der sichere sekundäre Signalausgang 8 bzw. der sekundäre sicherheitsgerichtete Signalausgang signalisiert der Sicherheitssteuerung 5, ob die sicheren primären Signalausgänge 7 des Funktransponders 6 den Zustand der Sicherheitssteuerung 5 steuern sollen, oder ob z.B. ein Sicherheitssensor 14 den Zustand der Sicherheitssteuerung 5 steuern soll und über die Sicherheitsfunktion bestimmen soll.

Der Funktransponder 6 gibt über den sicheren primären Signalausgang 7 bzw. sicheren Signalausgang bzw. über die sichere bidirektionale Schnittstelle 13 gemäß Figur 2, bzw. eine Sicherheitsschnittstelle ein sicheres Ausgangssignal an die Sicherheitssteuerung 5 aus, und damit insbesondere an das mobile Objekt 2. Beispielsweise wird das mobile Objekt 2 daraufhin abgebremst, verlangsamt oder gar gestoppt.

Über die sicheren primären Signalausgänge 7 bzw. die sichere bidirektionale Schnittstelle 13 erfolgt eine Ausgabe sicherheitsrelevanter Signale an die Sicherheitssteuerung 5 und damit an das mobile Objekt 2.

Insbesondere der Funktransponder 6 mit dem sicheren primären Signalausgang 7 erlaubt die direkte Einwirkung auf das mobile Objekt 2.

Wenn der Funktransponder 6 im Funknetz registriert ist und seine Sicherheitsfunktion ausführen kann, dann soll z.B. ein High-Pegel am sicheren sekundären Signalausgang 8 ausgegeben werden.

Wenn keine Funkverbindung besteht und die primäre Sicherheitsfunktion des Funktransponders 6 nicht ausgeführt werden kann, dann soll z.B. ein Low-Pegel am sicheren sekundären Signalausgang 8 ausgegeben werden.

Die verwendeten Pegel sind beispielshaft und können auch umgekehrt verwendet werden.

Der Funktransponder 6 kann auch mit einer sicheren bidirektionalen Schnittstelle 13 bzw. einem bidirektionalen Sicherheitsbus gemäß Figur 2 realisiert werden. Die beschriebenen primären und sekundären Sicherheitssignale sind dann entsprechend in den sicheren Daten enthalten, die über die bidirektionale Schnittstelle 13 übertragen werden.

Die sichere bidirektionale Schnittstelle 13 ist elektronisch mit der Sicherheitssteuerung 5 verbunden, wobei über die sichere bidirektionale Schnittstelle 13 jeweils sichere primäre Ausgangssignale übertragen werden, und über die sichere bidirektionale Schnittstelle 13 jeweils mindestens sichere sekundäre Ausgangsignale übertragen werden.

Die Anmeldung des Funktransponders 6 im Sicherheitssystem 1 erfolgt beispielsweise mit automatischer Registrierung. Der Funktransponder 6 sucht dabei permanent nach dem Funknetz und führt die Anmeldung im Sicherheitssystem 1 selbständig durch.

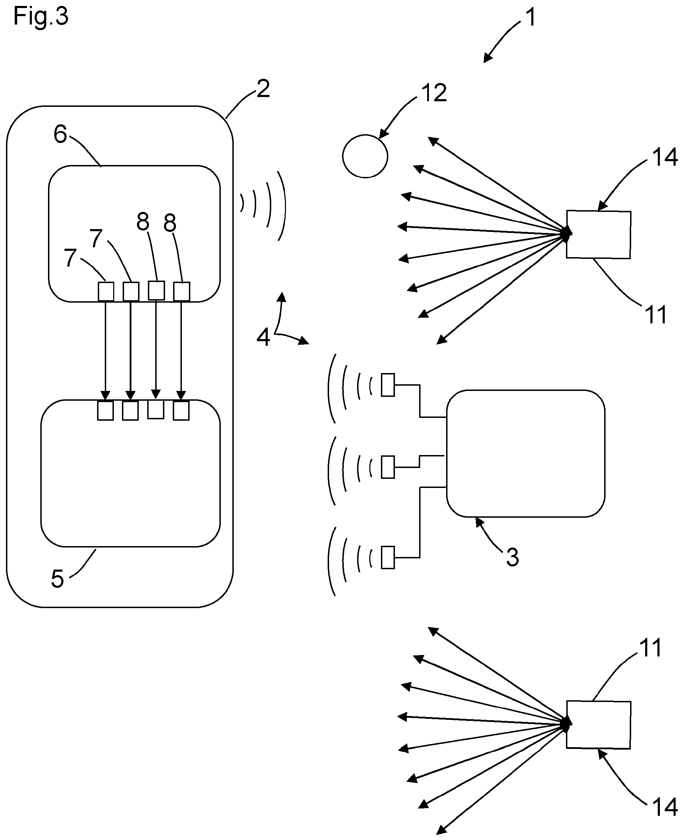

Gemäß Figur 3 ist mindestens ein Sicherheitssensor 14 als ortsauflösenden Sensor 11 zur Detektion mindestens eines Objektes 12 in einem Erfassungsbereich des ortsauflösenden Sensors 11 vorgesehen.

Bei dem ortsauflösenden Sensor 11 handelt es sich beispielsweise um einen optoelektronischen Sensor. Bei beispielsweise einem Lichtlaufzeitsensor als optoelektronischer Sensor wird das von einem Lichtsender ausgesendete Licht, welches von einer Person oder einem Objekt 12 remittiert wird, von einem Lichtempfänger empfangen und die Lichtlaufzeit vom Aussenden bis zum Empfangen von der Person oder dem Objekt wird ausgewertet, wodurch die Entfernung zu der Person oder dem Objekt bestimmt werden kann. Dabei handelt es sich um eine Ortung, nämlich beispielsweise der Bestimmung von Entfernung und Winkel.

Beispielsweise ist der ortsauflösende Sensor 11 zur mindestens flächigen Überwachung eines Überwachungsbereiches ausgebildet.

Beispielsweise ist der ortsauflösende Sensor 11 zur mindestens räumlichen Überwachung eines Überwachungsbereiches ausgebildet.

Beispielsweise ist der optoelektronische Sensor ein Laserscanner, ein Sicherheitslaserscanner, eine 3D-Kamera, eine Stereokamera oder eine Lichtlaufzeitkamera.

Zur Positionserfassung überwacht der ortsauflösende Sensor 11, der Laserscanner, der Sicherheitslaserscanner, die 3D-Kamera, die Stereokamera oder die Lichtlaufzeitkamera einen zweidimensionalen oder dreidimensionalen Überwachungsbereich bzw. eine Messdatenkontur. Dabei kann es sich auch synonym um ein Überwachungsfeld handeln.

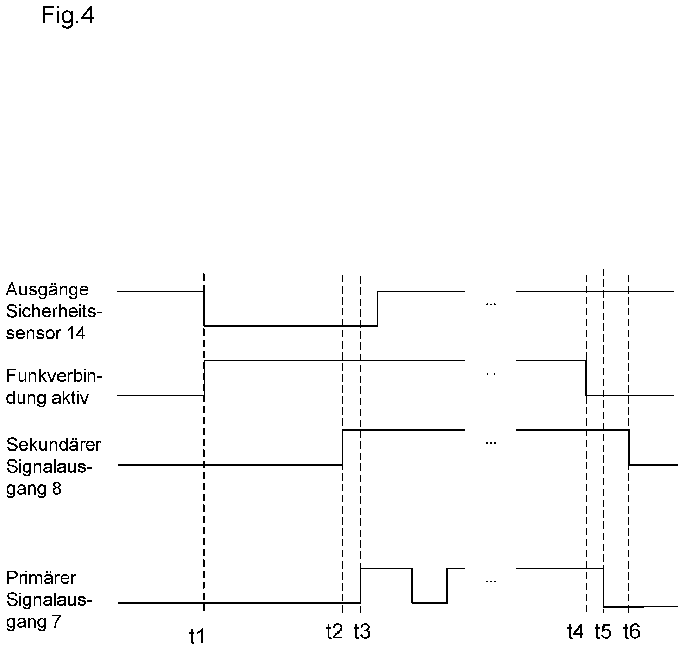

Ein zeitlicher Ablauf erfolgt beispielsweise wie folgt gemäß Figur 4:
Zu einem ersten Zeitpunkt t1 tritt der Funktransponder 6 in eine Funkzone ein und wird vom Sicherheitssystem 1 registriert. Eine Lokalisierungsfunktion bzw. eine Sicherheitsfunktion wird von der Steuer- und Auswerteeinheit 3 gestartet.

Zu einem zweiten Zeitpunkt t2 meldet der sichere sekundäre Signalausgang des Funktransponders 6 der Sicherheitssteuerung 5, dass der Funktransponder 6 bereit ist, die Sicherheitsfunktion zu übernehmen. Sichere Signalausgänge von einem anderen Sicherheitssensor 14 sind dabei noch in einem sicheren Zustand, so dass kein gefahrbringender Zustand von der Sicherheitssteuerung 5 zugelassen werden kann.

Zu einem dritten Zeitpunkt t3 sind die sicheren primären Signalausgänge 7 des Funktransponders 6 aktiv und werden von der Sicherheitssteuerung 5 ausgewertet. Die sicheren Signalausgänge von einem anderen Sicherheitssensor 14 können und werden von der Sicherheitssteuerung 5 ignoriert.

Zu einem vierten Zeitpunkt t4 reißt die Funkverbindung zum Funktransponder 6 beispielsweise ab.

Zu einem fünften Zeitpunkt t5 wechselt der sichere primäre Signalausgang 7 des Funktransponders 6 in einen sicheren Zustand.

Zu einem sechsten Zeitpunkt t6 signalisiert der sichere sekundäre Signalausgang 8, dass der Funktransponder 6 nicht mehr seine Sicherheitsfunktion ausführt und im sicheren Zustand verbleibt. Das bedeutet, dass die sicheren primären Signalausgänge 7 in einem sicheren Zustand bleiben. Die Sicherheitssteuerung 5 wechselt zur Auswertung der Sicherheitsausgänge von angeschlossenen Sicherheitssensoren 14 und ignoriert die primären Signalausgänge 7 des Funktransponders 6.

Hierdurch wird ein einfaches Sicherheitssystem 1 zum Wechsel der aktiven Sicherheitsquellen bereitgestellt.

Der Einsatzbereich von mobilen Objekten 2 bzw. fahrerloser Transportsysteme wie autonome mobile Objekte kann erweitert werden auf Aufenthaltsbereiche des mobilen Objektes, die mit einem konventionellen Sicherheitsscanner nicht abgesichert werden können.

Die Steuer- und Auswerteeinheit 3 bzw. ein zentraler RTLS-Server empfängt die gemessenen Signallaufzeiten und ermittelt daraus Positionswerte der vorhandenen Funktransponder 6.

Die Ortung der Funktransponder 6 erfolgt durch Laufzeitmessungen von Funksignalen, die zyklisch zwischen den Funktranspondern 6 und beispielsweise mehreren festen Funkstationen 15 ausgetauscht werden.

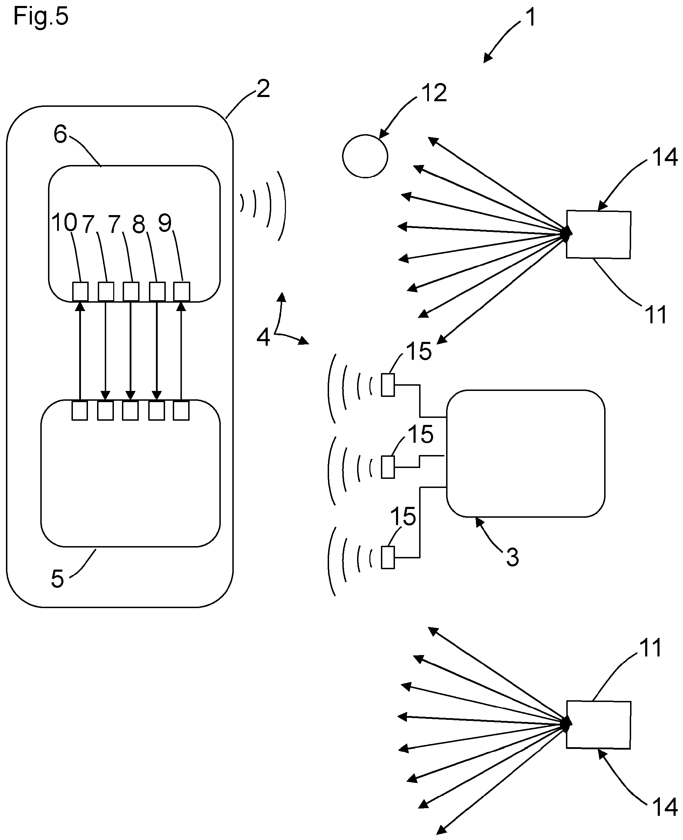

Insbesondere weist das Funkortungssystem 4 gemäß Figur 5 mindestens drei angeordnete Funkstationen 15 auf, wobei die Positionsdaten von der Funkstation 15 des Funkortungssystems 4 an die Steuer- und Auswerteeinheit 3 übermittelbar sind.

Gemäß Figur 5 weist der Funktransponder 6 mindestens einen sicheren Signaleingang 9 auf, wobei der sichere Signaleingang 9 mit der Sicherheitssteuerung 5 verbunden ist. Mittels des sichereren Signaleingangs 9 kann der Funktransponder 6 von der Sicherheitssteuerung 5 getestet werden. Beispielsweise wird zyklisch ein Signal von der Sicherheitssteuerung 5 an den Funktransponder 6 gesendet, um den Funktransponder 6 zu testen. Der Funktransponder 6 kann beispielsweise über den sicheren sekundären Signalausgang als Rückmeldung antworten.

Gemäß Figur 5 weist der Funktransponder 6 mindestens einen Triggersignaleingang 10 auf, wobei der Triggersignaleingang 10 mit der Sicherheitssteuerung 5 verbunden ist. Mittels des Triggersignaleingangs 10 des Funktransponders 6 kann die Sicherheitssteuerung 5 die Registrierung des Funktransponders 6 im Sicherheitssystem 1 starten bzw. initiieren.

Eine nicht beanspruchte Weiterbildung besteht darin, ein Sicherheitssystem 1 mit einem Funktransponder 6 zu implementieren, wobei der sichere sekundäre Signalausgang 8 des Funktransponders 6 beispielsweise zur Steuerung von Schutzfeldern des Sicherheitssensors 14, insbesondere des ortsauflösenden Sensors, insbesondere eines Laserscanners verwendet werden kann. Wenn die Sicherheitsfunktion des Funktransponders 6 aktiv ist, dann können die Schutzfelder des Laserscanners z.B. verkleinert werden.

Es kann beispielsweise entweder ein Low-Pegel am sicheren Ausgang eines Sicherheitssensors 14 (z.B. eines Laserscanners) oder eine fallende Flanke (oder ein anderes definiertes Ereignis) einen Registrierversuch bei der Sicherheitssteuerung 5 auslösen. Dieser wird beispielsweise dadurch erzeugt, dass ein Objekt, welches an einer definierten Übergangsstelle steht, das Schutzfeld des Sicherheitssensors 14 verletzt.

Wichtig ist, dass wenn der sichere sekundäre Signalausgang 8 des Funktransponders 6 anzeigt, dass die Sicherheitsfunktion des Funktransponders 6 nicht aktiv ist, dann muss die Sicherheitssteuerung 5 entweder die sicheren primären Signalausgänge 7 des Funktransponders 6 auswerten, welche sich im sicheren Zustand befinden, oder die sicheren Ausgänge eines Sicherheitssensors 14, beispielsweise eines Laserscanner auswerten.

Des Weiteren kann der Funktransponder 6 über eine Funktion verfügen, die bei Ausstattung mit einem Sicherheitssensor 14 beispielsweise einem Scanner einen Parallelbetrieb vereinfacht.

Eine Funktion ist beispielsweise eine, welche die sicheren primären Signalausgänge 7 des Funktransponders 6 permanent auf dem Pegel HIGH hält, wenn eine entsprechende sicherheitsgerichte Anweisung über einen Funkkanal des Funktransponders 6 erhalten wird. Im Fehlerfall oder bei Power-down des Funktransponders 6 schalten die sicheren primären Signalausgänge 7 unabhängig von dieser Funktion in den Pegel LOW, also in den sicheren Zustand.

Wenn die übergeordnete Sicherheitssteuerung 5 also z.B. einen Lidar-Laserscanner aktiv nutzt bzw. weiß, dass dieses Sicherheitssystem 1 aktiv ist, dann wird der sichere Funktransponder 6 überbrückt, sodass die lokale Sicherheitssteuerung 5 dadurch nicht in den sicheren Zustand wechseln kann. Die Sicherheit wird dann beispielsweise durch den Sicherheitssensor 14, bzw. den Laserscanner gewährleistet.

Beispielsweise ist das Funkortungssystem 4 ein Ultrabreitband-Funkortungssystem, wobei die verwendete Frequenz im Bereich von 3,1 GHz bis 10,6 GHz ist.

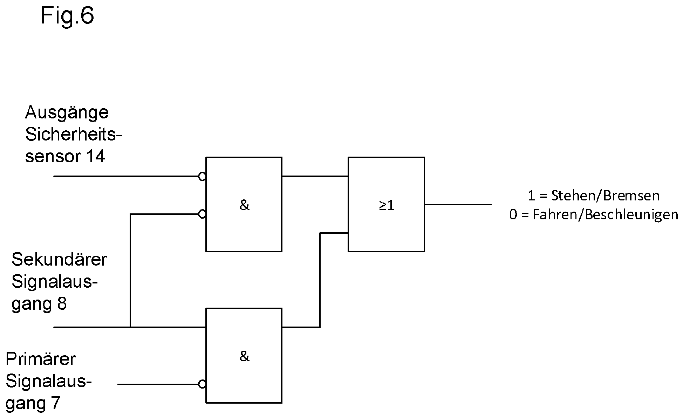

Figur 6 zeigt ein einfaches Implementierungsbeispiel. Eine einfache Logik, die in der Sicherheitssteuerung eines mobilen Objektes implementiert ist, kann die Sicherheitsausgänge des Sicherheitssensors und die sicheren primären Signalausgänge 7 und die sicheren sekundären Signalausgänge 8 folgendermaßen auswerten:

| Primärer Signalausgang 7 | Signalausgang Sicherheitssensor 14 | Sekundärer Signalausgang 8 | Bremsen mobiles Objekt |
|---|---|---|---|
| Don't care | 0 | 0 | 1 |
| Don't care | 1 | 0 | 0 |
| 0 | Don't care | 1 | 1 |
| 1 | Don't care | 1 | 0 |

Aus Gründen der Übersichtlichkeit ist der Zustand der sicheren zweikanaligen Signale als ein einkanaliger Zustand dargestellt.

### Bezugszeichen:

1 Sicherheitssystem
2 mobiles Objekt
3 Steuer- und Auswerteeinheit
4 Funkortungssystem
5 Sicherheitssteuerung
6 Funktransponder
7 sichere primäre Signalausgänge
8 sichere sekundäre Signalausgänge
9 sicherer Signaleingang
10 Triggersignaleingang
11 ortsauflösender Sensor
12 Objekt
13 sichere bidirektionale Schnittstelle
14 Sicherheitssensor
15 Funkstationen

## Patentansprüche

1. Sicherheitssystem (1) zur Lokalisierung von mindestens einem ortsveränderlichen mobilen Objekt (2), wobei das Sicherheitssystem (1) mindestens eine Steuer- und Auswerteeinheit (3), mindestens ein Funkortungssystem (4), mindestens eine Sicherheitssteuerung (5) und mindestens einen Funktransponder (6) umfasst,
wobei an dem mobilen Objekt (2) der Funktransponder (6) angeordnet ist,
wobei mittels dem Funkortungssystem (4) Positionsdaten des Funktransponders und damit Positionsdaten des mobilen Objekts (2) ermittelbar sind,
wobei die Positionsdaten von dem Funkortungssystem (4) an die Steuer- und Auswerteeinheit (3) übermittelbar sind,
wobei die Steuer- und Auswerteeinheit (3) ausgebildet ist, die Positionsdaten des Funktransponders (6) zyklisch zu erfassen,
wobei die Steuer- und Auswerteeinheit (3) ausgebildet ist, die Positionsdaten des Funkortungssystems (4) auszuwerten,
wobei der Funktransponder (6) jeweils sichere primäre Signalausgänge (7) aufweist,
und der Funktransponder (6) jeweils mindestens einen sicheren sekundären Signalausgang (8) aufweist,
wobei die sicheren primären Signalausgänge (7) elektronisch mit der Sicherheitssteuerung (5) verbunden sind und
der sichere sekundäre Signalausgang (8) mit der Sicherheitssteuerung (5) verbunden ist,
wobei über die sicheren primären Signalausgänge (7) eine Ausgabe sicherheitsrelevanter Signale an die Sicherheitssteuerung (5) und damit an das mobile Objekt (2) erfolgt,
**dadurch gekennzeichnet, dass**
der sichere sekundäre Signalausgang (8) der Sicherheitssteuerung (5) signalisiert, ob die sicheren primären Signalausgänge (7) des Funktransponders (6) den Zustand der Sicherheitssteuerung (5) steuern sollen, wobei die sicheren Signalausgänge von anderen Sicherheitssensoren (14) von der Sicherheitssteuerung ignoriert werden, oder ob mindestens ein Sicherheitssensor (14) den Zustand der Sicherheitssteuerung (5) steuern soll und über eine Sicherheitsfunktion bestimmen soll, wobei die Sicherheitssteuerung zur Auswertung der Sicherheitsausgänge von angeschlossenen Sicherheitssensoren wechselt und die sicheren primären Signalausgänge des Funktransponders ignoriert.

2. Sicherheitssystem (1) nach Anspruch 1, **dadurch gekennzeichnet, dass** der Funktransponder (6) mindestens einen sicheren Signaleingang (9) aufweist, wobei der sichere Signaleingang (9) mit der Sicherheitssteuerung (5) verbunden ist.

3. Sicherheitssystem (1) nach Anspruch 1, **dadurch gekennzeichnet, dass** der Funktransponder mindestens einen Triggersignaleingang (10) aufweist, wobei der Triggersignaleingang (10) mit der Sicherheitssteuerung (5) verbunden ist.

4. Sicherheitssystem (1) nach Anspruch 1, **dadurch gekennzeichnet, dass** mindestens ein ortsauflösender Sensor (11) zur Detektion mindestens eines Objektes (12) in einem Erfassungsbereich des ortsauflösenden Sensors (11) vorgesehen ist.

5. Sicherheitssystem (1) nach mindestens einem der vorhergehenden Ansprüche, **dadurch gekennzeichnet, dass** das Funkortungssystem (4) ein Ultrabreitband-Funkortungssystem ist, wobei die verwendete Frequenz im Bereich von 3,1 GHz bis 10,6 GHz ist.

6. Sicherheitssystem (1) nach mindestens einem der vorhergehenden Ansprüche, **dadurch gekennzeichnet, dass** eine erste Überprüfungseinheit vorgesehen ist, wobei die erste Überprüfungseinheit mit der Steuer- und Auswerteeinheit (3) verbunden ist, wobei die Überprüfungseinheit ausgebildet ist, die Steuer- und Auswerteeinheit (3) zu überprüfen.

## Claims

1. A safety system (1) for locating at least one movable mobile object (2), wherein the safety system (1) comprises at least one control and evaluation unit (3), at least one radio locating system (4), at least one safety controller (5) and at least one radio transponder (6), wherein the radio transponder (6) is arranged on the mobile object (2), wherein position data of the radio transponder and thus position data of the mobile object (2) can be determined by means of the radio locating system (4), wherein the position data can be transmitted from the radio locating system (4) to the control and evaluation unit (3), wherein the control and evaluation unit (3) is configured to cyclically acquire the position data of the radio transponder (6), wherein the control and evaluation unit (3) is configured to evaluate the position data of the radio locating system (4), wherein the radio transponder (6) has respective safe primary signal outputs (7), and the radio transponder (6) has at least one respective safe secondary signal output (8), wherein the safe primary signal outputs (7) are electronically connected to the safety controller (5) and the safe secondary signal output (8) is connected to the safety controller (5), wherein safety-relevant signals are output via the safe primary signal outputs (7) to the safety controller (5) and thus to the mobile object (2),
**characterised in that**
the safe secondary signal output (8) signals to the safety controller (5) whether the safe primary signal outputs (7) of the radio transponder (6) are to control the state of the safety controller (5), wherein the safe signal outputs of other safety sensors (14) are ignored by the safety controller, or whether at least one safety sensor (14) is to control the state of the safety controller (5) and determine a safety function, wherein the safety controller switches to evaluating the safety outputs of connected safety sensors and ignores the safe primary signal outputs of the radio transponder.

2. The safety system (1) according to claim 1, **characterised in that** the radio transponder (6) has at least one safe signal input (9), wherein the safe signal input (9) is connected to the safety controller (5).

3. The safety system (1) according to claim 1, **characterised in that** the radio transponder has at least one trigger signal input (10), wherein the trigger signal input (10) is connected to the safety controller (5).

4. The safety system (1) according to claim 1, **characterised in that** at least one position-resolving sensor (11) is provided for detecting at least one object (12) in a detection zone of the position-resolving sensor (11).

5. The safety system (1) according to at least one of the preceding claims, **characterised in that** the radio locating system (4) is an ultra-wideband radio locating system, wherein the frequency used is in the range from 3.1 GHz to 10.6 GHz.

6. The safety system (1) according to at least one of the preceding claims, **characterised in that** a first checking unit is provided, wherein the first checking unit is connected to the control and evaluation unit (3), wherein the checking unit is configured to check the control and evaluation unit (3).

## Revendications

1. Système de sécurité (1) destiné à localiser au moins un objet mobile à position variable (2), le système de sécurité (1) comprenant au moins une unité de commande et d'évaluation (3), au moins un système de localisation radio (4), au moins une commande de sécurité (5) et au moins un transpondeur radio (6), le transpondeur radio (6) étant disposé sur l'objet mobile (2), des données de position du transpondeur radio et ainsi des données de position de l'objet mobile (2) pouvant être déterminées au moyen du système de localisation radio (4), les données de position pouvant être transmises du système de localisation radio (4) à l'unité de commande et d'évaluation (3), l'unité de commande et d'évaluation (3) étant configurée pour acquérir cycliquement les données de position du transpondeur radio (6), l'unité de commande et d'évaluation (3) étant configurée pour évaluer les données de position du système de localisation radio (4), le transpondeur radio (6) présentant respectivement des sorties de signal primaires sûres (7), et le transpondeur radio (6) présentant respectivement au moins une sortie de signal secondaire sûre (8), les sorties de signal primaires sûres (7) étant reliées électroniquement à la commande de sécurité (5) et la sortie de signal secondaire sûre (8) étant reliée à la commande de sécurité (5), des signaux relatifs à la sécurité étant émis, par l'intermédiaire des sorties de signal primaires sûres (7), à destination de la commande de sécurité (5) et ainsi de l'objet mobile (2),
**caractérisé en ce que**
la sortie de signal secondaire sûre (8) signale à la commande de sécurité (5) si les sorties de signal primaires sûres (7) du transpondeur radio (6) doivent commander l'état de la commande de sécurité (5), les sorties de signal sûres d'autres capteurs de sécurité (14) étant ignorées par la commande de sécurité, ou si au moins un capteur de sécurité (14) doit commander l'état de la commande de sécurité (5) et déterminer une fonction de sécurité, la commande de sécurité passant à l'évaluation des sorties de sécurité de capteurs de sécurité raccordés et ignorant les sorties de signal primaires sûres du transpondeur radio.

2. Système de sécurité (1) selon la revendication 1, **caractérisé en ce que** le transpondeur radio (6) présente au moins une entrée de signal sûre (9), l'entrée de signal sûre (9) étant reliée à la commande de sécurité (5).

3. Système de sécurité (1) selon la revendication 1, **caractérisé en ce que** le transpondeur radio présente au moins une entrée de signal de déclenchement (10), l'entrée de signal de déclenchement (10) étant reliée à la commande de sécurité (5).

4. Système de sécurité (1) selon la revendication 1, **caractérisé en ce qu'**au moins un capteur à résolution spatiale (11) est prévu pour détecter au moins un objet (12) dans une zone de détection du capteur à résolution spatiale (11).

5. Système de sécurité (1) selon au moins l'une des revendications précédentes, **caractérisé en ce que** le système de localisation radio (4) est un système de localisation radio à ultra-large bande, la fréquence utilisée étant comprise dans la plage allant de 3,1 GHz à 10,6 GHz.

6. Système de sécurité (1) selon au moins l'une des revendications précédentes, **caractérisé en ce qu'**une première unité de vérification est prévue, la première unité de vérification étant reliée à l'unité de commande et d'évaluation (3), l'unité de vérification étant configurée pour vérifier l'unité de commande et d'évaluation (3).
